# EUROPÄISCHE PATENTSCHRIFT

(11) **EP 3 806 581 B1**
(45) Veröffentlichungstag und Bekanntmachung des Hinweises auf die Patenterteilung: **15.06.2022**
(21) Anmeldenummer: 20195040.9
(22) Anmeldetag: 08.09.2020
(51) Int. Cl.: H05B 6/06, H05B 1/02, H05B 3/68, A47J 45/06

(54) **AUFSTELLGERÄT FÜR EIN KOCHFELD MIT EINEM GRIFF**
SETUP DEVICE FOR A COOKING HOB WITH A HANDLE
DISPOSITIF D'INSTALLATION POUR UNE PLAQUE DE CUISSON DOTÉ D'UNE POIGNÉE

(30) Priorität: 07.10.2019 DE 102019126830
(43) Veröffentlichungstag der Anmeldung: 14.04.2021
(73) Patentinhaber: Miele & Cie. KG, 33332 Gütersloh (DE)
(72) Erfinder: Müller, Christoph, 32289 Rödinghausen (DE); Gehring, Nils Marius, 33739 Bielefeld (DE); Ohrmann, Niels, 33332 Gütersloh (DE); Ebke, Daniel, 33613 Bielefeld (DE)

(56) Entgegenhaltungen:
- DE-T2- 60 132 991
- DE-U1- 20 203 566
- FR-A1- 3 033 995

## Beschreibung

Die Erfindung betrifft ein Aufstellgerät für ein Kochfeld mit einem Griff der im Oberbegriff des Patentanspruchs 1 genannten Art.

Derartige Aufstellgeräte für Kochfelder sind in einer Vielzahl von Ausführungsformen bereits vorbekannt. Die bekannten Aufstellgeräte umfassen beispielsweise einen Griff zur Handhabung des Aufstellgeräts, eine Steuerung, eine Sendeeinheit zur Signalübertragung von dem Aufstellgerät zu dem Kochfeld und mindestens eine Eingabeeinheit mit mindestens einem in dem Griff integrierten Eingabebereich zur Eingabe eines Benutzerbefehls durch einen Benutzer des Aufstellgeräts, wobei die Sendeeinheit und die Eingabeeinheit mit der Steuerung signalübertragend verbunden sind, und wobei mittels des Benutzerbefehls das Kochfeld ansteuerbar ist.

Ferner sind als Pfannen und Töpfe ausgebildete Aufstellgeräte bekannt, die mit einem als Induktionskochfeld ausgebildeten Kochfeld ein System bilden. So schlägt die

EP 3 001 771 B1 ein Verfahren zur Detektion der Identität eines Topfes auf einer Kochstelle eines Kochfelds vor. Das Kochfeld weist ein Topfsensormittel auf, mittels dem das Vorhandensein eines Topfes auf der Kochstelle detektiert werden soll. Der Topf weist einen Temperatursensor und einen Sender auf, wobei der Sender mindestens zwei Datensätze an einen Empfänger einer Kochfeldsteuerung übertragen soll. Der erste Datensatz soll eine Identifizierungseinrichtung für einen einzelnen Topf darstellen, während der zweite Datensatz den mittels des Temperatursensors gemessenen Temperaturzustand des Topfes betreffen soll. Wenn das Topfsensormittel das Vorhandensein eines beliebigen Topfes detektiert hat, soll mittels einer Leistungsprofilvorlage ein Heizelement des Kochfelds aktiviert werden, um eine Temperaturveränderung im auf der Kochstelle aufgestellten Topf zu bewirken. Aufgrund der thermischen Kapazität des Topfes liegt dabei immer eine Verzögerung der Temperaturveränderung zu der Leistungsprofilvorlage vor. Mittels der an die Kochfeldsteuerung zurückgesendeten Temperaturinformationen soll dann bestimmt werden, ob das vom Temperatursensor am Topf detektierte Temperaturprofil zu der vom Heizelement erzeugten Vorlage des Leistungsprofils korrespondiert. Falls Temperaturprofil und Leistungsprofilvorlage zueinander korrespondieren, soll der Topf mit der Topfidentifikationseinrichtung als auf diese Kochstelle aufgestellt erkannt werden. FR3033995 A1 offenbart ein Aufstellgerät gemäß des Oberbegriffes von Anspruch 1.

Der Erfindung stellt sich somit das Problem ein Aufstellgerät für ein Kochfeld anzugeben, bei dem eine Fehlbedienung wirksam verhindert, zumindest jedoch reduziert ist.

Erfindungsgemäß wird dieses Problem durch ein Aufstellgerät mit den Merkmalen des Patentanspruchs 1 gelöst, das dadurch gekennzeichnet ist, dass der Griff einen Greifabschnitt zum Greifen zwecks einer manuellen Bewegung des Aufstellgeräts und mindestens einen Eingabeabschnitt aufweist, wobei der Eingabebereich in dem Eingabeabschnitt angeordnet ist, J wobei zumindest in dem Greifabschnitt mindestens ein Sensor zur Detektierung einer Annäherung an den Griff und/oder zur Detektierung einer Berührung des Griffs durch den Benutzer angeordnet ist, wobei in Abhängigkeit der Detektierung der Annäherung an den Eingabeabschnitt des Griffs durch eine menschliche Hand mittels des als Näherungssensor ausgeführten Sensors die Eingabe des Benutzerbefehls mittels der Steuerung sperrbar ist, und/oder wobei in Abhängigkeit der Detektierung des Greifens durch diesen Sensor die Eingabe des Benutzerbefehls mittels der Steuerung sperrbar ist.

Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass eine Fehlbedienung des Aufstellgeräts wirksam verhindert, zumindest jedoch reduziert ist. Damit ist auch die Sicherheit bei der Bedienung des Aufstellgeräts und insbesondere die Sicherheit bei der Bedienung des Kochfelds wesentlich verbessert, ohne dass dadurch der Bedienkomfort für den Benutzer des Aufstellgeräts vermindert ist. Zum einen ist durch die klare räumliche Trennung des Griffs in einen Greifabschnitt und in den mindestens einen Eingabeabschnitt eine ungewollte Bedienung des mindestens einen Eingabebereichs der mindestens einen Eingabeeinheit bei einem Greifen des Griffs zur manuellen Bewegung des Aufstellgeräts wirksam entgegengewirkt. Zum anderen ist durch das Vorsehen des mindestens einen Sensors zumindest in dem Greifabschnitt zur Detektierung einer Annäherung an den Griff und/oder einer Berührung des Griffs durch den Benutzer zwecks manueller Bewegung des Aufstellgeräts eine Greifabsicht des Benutzers des Aufstellgeräts automatisch erkennbar. Bei dem erfindungsgemäßen Aufstellgerät ist somit eine Unterscheidung zwischen einer Bedienung des Griffs zum Zwecke der Eingabe eines Benutzerbefehls auf der einen Seite und einer Bedienung des Griffs zum Zwecke der manuellen Bewegung des Aufstellgeräts auf der anderen Seite ermöglicht.

Das Aufstellgerät ist nach Art, Funktionsweise, Dimensionierung und Material in weiten geeigneten Grenzen frei wählbar. Wie oben ausgeführt, kann das Aufstellgerät als eine Pfanne oder ein Topf ausgebildet sein. Jedoch sind auch andere Ausführungsformen wie Wasserkocher, Bräter oder dergleichen denkbar. Entsprechend der Ausführungsform des Aufstellgeräts kann das Aufstellgerät über einen Griff oder mehrere Griffe verfügen, wobei die erfindungsgemäße Ausbildung des Griffs bei lediglich einem der Griffe oder einer Mehrzahl der Griffe vorliegen kann. Der mindestens eine Eingabebereich kann beispielsweise als ein berührungsempfindlicher Bereich des Griffs ausgebildet sein. In anderen Ausführungsformen kann der mindestens eine Eingabebereich auch als ein näherungssensitiver Bereich ausgebildet sein. Der mindestens eine Eingabebereich kann dabei von außen sichtbar oder unsichtbar an dem Griff angeordnet sein. Beispielsweise kann der mindestens eine Eingabebereich in den Griff vollständig integriert sein, so dass dieser Eingabebereich von außen weder sichtbar noch fühlbar ist. Das Aufstellgerät kann für ein induktives Kochfeld geeignet ausgebildet sein. Dies ist jedoch nicht zwingend erforderlich. Das erfindungsgemäße Aufstellgerät kann für alle denkbaren Kochfeldtypen geeignet ausgebildet sein.

Grundsätzlich ist die weitere Verarbeitung der Detektierung einer Annäherung an den Griff und/oder einer Berührung des Griffs durch den Benutzer, also das Verfahren zur Verarbeitung der Detektierung einer Annäherung an den Griff und/oder einer Berührung des Griffs durch den Benutzer, in weiten geeigneten Grenzen frei wählbar. Entsprechendes gilt für die diesbezügliche Ausbildung des erfindungsgemäßen Aufstellgeräts.

Gemäß der Erfindung ist vorgesehen, dass mindestens einer des mindestens einen Sensors in dem Greifabschnitt angeordnet und zur Detektierung des Greifens des Griffs in dem Greifabschnitt durch eine menschliche Hand ausgebildet ist, wobei in Abhängigkeit der Detektierung dieses Greifens durch diesen Sensor die Eingabe des Benutzerbefehls mittels der Steuerung sperrbar ist. Hierdurch ist das erfindungsgemäße Aufstellgerät auf konstruktiv einfache Weise realisiert.

Entsprechend sieht eine vorteilhafte Weiterbildung des Verfahrens vor, dass mindestens einer des mindestens einen Sensors in dem Greifabschnitt angeordnet und zur Detektierung des Greifens des Griffs in dem Greifabschnitt durch eine menschliche Hand ausgebildet ist, wobei in Abhängigkeit der Detektierung dieses Greifens durch diesen Sensor die Eingabe des Benutzerbefehls mittels der Steuerung gesperrt wird.

Eine weitere vorteilhafte Weiterbildung des erfindungsgemäßen Aufstellgeräts sieht vor, dass mindestens einer des mindestens einen Sensors als ein Berührungssensor ausgebildet ist, wobei der Berührungssensor zumindest in dem Eingabeabschnitt, mit Ausnahme des Eingabebereichs, angeordnet ist, und wobei in Abhängigkeit der Detektierung einer Berührung des Eingabeabschnitts des Griffs durch eine menschliche Hand mittels dieses Berührungssensors die Eingabe des Benutzerbefehls mittels der Steuerung sperrbar ist. Auf diese Weise ist der Schutz gegen eine Fehlbedienung des Aufstellgeräts weiter verbessert. Der Berührungssensor kann beispielsweise als ein kapazitiver Sensor ausgebildet sein. Entsprechend sieht eine vorteilhafte Weiterbildung des Verfahrens vor, dass mindestens einer des mindestens einen Sensors als ein Berührungssensor ausgebildet ist, wobei der Berührungssensor zumindest in dem Eingabeabschnitt, mit Ausnahme des Eingabebereichs, angeordnet ist, und wobei in Abhängigkeit der Detektierung einer Berührung des Eingabeabschnitts des Griffs durch eine menschliche Hand mittels dieses Berührungssensors die Eingabe des Benutzerbefehls mittels der Steuerung gesperrt wird.

Eine andere vorteilhafte Weiterbildung des erfindungsgemäßen Aufstellgeräts sieht vor, dass mindestens einer des mindestens einen Sensors als ein Näherungssensor ausgebildet ist, wobei der Näherungssensor zumindest in dem Eingabeabschnitt, mit Ausnahme des Eingabebereichs, angeordnet ist, und wobei in Abhängigkeit der Detektierung einer Annäherung an den Eingabeabschnitt des Griffs durch eine menschliche Hand mittels dieses Näherungssensors die Eingabe des Benutzerbefehls mittels der Steuerung sperrbar ist. Hierdurch ist eine gewünschte Sperrung der Eingabe des Benutzerbefehls bereits vor der eigentlichen Berührung des Griffs durch den Benutzer ermöglicht, so dass die Reaktionszeit reduziert ist. Der Näherungssensor kann beispielsweise als ein Ultraschallsensor oder als ein Infrarotlichtsensor ausgebildet sein.

Entsprechend sieht eine vorteilhafte Weiterbildung des Verfahrens vor, dass mindestens einer des mindestens einen Sensors als ein Näherungssensor ausgebildet ist, wobei der Näherungssensor zumindest in dem Eingabeabschnitt, mit Ausnahme des Eingabebereichs, angeordnet ist, und wobei in Abhängigkeit der Detektierung einer Annäherung an den Eingabeabschnitt des Griffs durch eine menschliche Hand mittels dieses Näherungssensors die Eingabe des Benutzerbefehls mittels der Steuerung gesperrt wird.

Eine weitere vorteilhafte Weiterbildung des erfindungsgemäßen Aufstellgeräts sieht vor, dass mindestens einer des mindestens einen Sensors als ein Näherungssensor ausgebildet ist, wobei der Näherungssensor zumindest in dem Greifabschnitt angeordnet ist, und wobei in Abhängigkeit der Detektierung einer Annäherung an den Greifabschnitt des Griffs durch eine menschliche Hand mittels dieses Näherungssensors eine Anzeigeeinheit des Aufstellgeräts und/oder des Kochfelds mittels der Steuerung einschaltbar ist. Auf diese Weise kann der Benutzer bereits frühzeitig über den Zustand des Aufstellgeräts und/oder des Kochfelds informiert werden, ohne dabei weitere Bedienschritte vornehmen zu müssen.

Entsprechend sieht eine vorteilhafte Weiterbildung des Verfahrens vor, dass mindestens einer des mindestens einen Sensors als ein Näherungssensor ausgebildet ist, wobei der Näherungssensor zumindest in dem Greifabschnitt angeordnet ist, und wobei in Abhängigkeit der Detektierung einer Annäherung an den Greifabschnitt des Griffs durch eine menschliche Hand mittels dieses Näherungssensors eine Anzeigeeinheit des Aufstellgeräts und/oder des Kochfelds mittels der Steuerung eingeschaltet werden/wird.

Eine besonders vorteilhafte Weiterbildung des erfindungsgemäßen Aufstellgeräts sieht vor, dass in Abhängigkeit der mittels des Sensors detektierten Annäherung an den Griff und/oder Berührung des Griffs die Steuerung des Aufstellgeräts und/oder eine Kochfeldsteuerung des Kochfelds von einem Standby-Modus in einen Bereitschaftsmodus oder einen Betriebsmodus überführbar ist, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts zu einer Kochstelle des Kochfelds und in dem Betriebsmodus für den Betrieb des Aufstellgeräts und/oder des Kochfelds in vollem Funktionsumfang ausgebildet sind/ist. Hierdurch ist zum einen ein energiesparender Betrieb des Aufstellgeräts und/oder des Kochfelds ermöglicht. Zum anderen ist damit der Bedienkomfort bei gleichzeitig gewährleisteter Sicherheit bei der Bedienung des Aufstellgeräts und des Kochfelds weiter gesteigert.

Entsprechend sieht eine besonders vorteilhafte Weiterbildung des Verfahrens vor, dass in Abhängigkeit der mittels des Sensors detektierten Annäherung an den Griff und/oder Berührung des Griffs die Steuerung des Aufstellgeräts und/oder eine Kochfeldsteuerung des Kochfelds von einem Standby-Modus in einen Bereitschaftsmodus oder einen Betriebsmodus überführt werden, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts zu einer Kochstelle des Kochfelds und in dem Betriebsmodus für den Betrieb des Aufstellgeräts und/oder des Kochfelds in vollem Funktionsumfang ausgebildet sind/ist.

Eine andere vorteilhafte Weiterbildung des erfindungsgemäßen Aufstellgeräts sieht vor, dass das Kochfeld in Abhängigkeit der Detektion der Annäherung an den Griff und/oder der Berührung des Griffs mittels der Steuerung einschaltbar ist. Auf diese Weise ist der Bedienkomfort bei gleichzeitiger Gewährleistung der Sicherheit bei der Bedienung des Aufstellgeräts und des Kochfelds zusätzlich erhöht.

Entsprechend sieht eine vorteilhafte Weiterbildung des Verfahrens vor, dass das Kochfeld in Abhängigkeit der Detektion der Annäherung an den Griff und/oder der Berührung des Griffs mittels der Steuerung eingeschaltet wird.

Eine weitere vorteilhafte Weiterbildung des erfindungsgemäßen Aufstellgeräts sieht vor, dass mindestens einer des mindestens einen Sensors zur Detektion einer Drehbewegung einer menschlichen Hand relativ zu dem Griff ausgebildet ist, wobei in Abhängigkeit der Detektion der Drehbewegung ein Benutzerbefehl durch den Benutzer eingebbar ist. Hierdurch ist es möglich, den mindestens einen Sensor gleichzeitig für eine intuitive Eingabe eines Benutzerbefehls durch den Benutzer zu verwenden. Somit ist die Funktionalität des mindestens einen Sensors erhöht. Diese Eingabe eines Benutzerbefehls kann dabei zusätzlich zu oder alternativ zu der Eingabe eines Benutzerbefehls mittels des mindestens einen Eingabebereichs erfolgen.

Entsprechend sieht eine vorteilhafte Weiterbildung des Verfahrens vor, dass mindestens einer des mindestens einen Sensors zur Detektion einer Drehbewegung einer menschlichen Hand relativ zu dem Griff ausgebildet ist, wobei in Abhängigkeit der Detektion der Drehbewegung ein Benutzerbefehl durch den Benutzer eingegeben wird.

Eine andere vorteilhafte Weiterbildung des erfindungsgemäßen Aufstellgeräts sieht vor, dass das Aufstellgerät einen mit der Steuerung signalübertragend verbundenen Bewegungssensor zur Detektion einer manuellen Bewegung des Aufstellgeräts aufweist, wobei in Abhängigkeit der Detektion der Annäherung an den Griff und/oder der Berührung des Griffs und der Detektion der manuellen Bewegung des Aufstellgeräts mittels der Steuerung eine Leistung des Kochfelds automatisch reduzierbar ist. Auf diese Weise ist es möglich, beispielsweise eine Beeinträchtigung oder eine Beschädigung von gegenüber mechanischen Belastungen empfindlichen Bauteilen des Aufstellgeräts und/oder des Kochfelds wirksam zu verhindern oder zumindest zu reduzieren. Insbesondere gilt dies für einen in einem Schwingkreis eines induktiven Kochfelds verbauten IGBT, also einem Bipolartransistor mit isolierter Gate-Elektrode, auf Englisch: Insulated-Gate Bipolar Transistor. Der Bewegungssensor kann beispielsweise als ein Beschleunigungssensor, ein Gyrosensor und/oder ein Schwingungssensor ausgebildet sein.

Entsprechend sieht eine vorteilhafte Weiterbildung des Verfahrens vor, dass das Aufstellgerät einen mit der Steuerung signalübertragend verbundenen Bewegungssensor zur Detektion einer manuellen Bewegung des Aufstellgeräts aufweist, wobei in Abhängigkeit der Detektion der Annäherung an den Griff und/oder der Berührung des Griffs und der Detektion der manuellen Bewegung des Aufstellgeräts mittels der Steuerung eine Leistung des Kochfelds automatisch reduziert wird.

Eine weitere vorteilhafte Weiterbildung des erfindungsgemäßen Aufstellgeräts sieht vor, dass in dem Griff ein erster Eingabeabschnitt mit mindestens einem ersten Eingabebereich und ein zweiter Eingabeabschnitt mit mindestens einem zweiten Eingabebereich angeordnet sind, wobei der Greifabschnitt zwischen dem ersten und dem zweiten Eingabeabschnitt an dem Griff angeordnet ist. Hierdurch ist es möglich, voneinander verschiedene Eingabebereiche auf konstruktiv einfache Weise voneinander räumlich zu trennen. Beispielsweise ist dies sinnvoll, wenn eine Bedienung des ersten Eingabebereichs nicht zwingend von einer Bedienung des zweiten Eingabebereichs gefolgt wird. So könnte ein als Einschalter für das Aufstellgerät ausgebildeter erster Eingabebereich von als Leistungsstufeneinstellelemente für das Kochfeld ausgebildeten zweiten Eingabebereichen wirksam getrennt werden.

Ein Ausführungsbeispiel der Erfindung ist in der Zeichnung rein schematisch dargestellt und wird nachfolgend näher beschrieben. Es zeigt die einzige Figur,

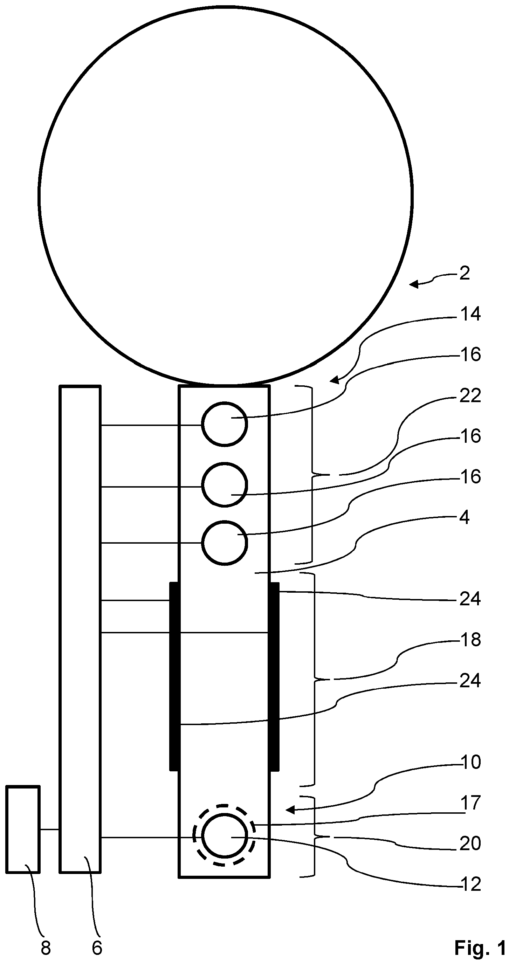

- Figur 1: ein Ausführungsbeispiel des erfindungsgemäßen Aufstellgeräts in einer Draufsicht.

In der Fig. 1 ist ein Aufstellgerät für ein Kochfeld exemplarisch dargestellt. Das Aufstellgerät 2 ist als eine Pfanne für ein nicht dargestelltes induktives Kochfeld ausgebildet und umfasst einen Griff 4 zur Handhabung des Aufstellgeräts 2, eine Steuerung 6, eine Sendeeinheit 8 zur Signalübertragung von dem Aufstellgerät 2 zu dem Kochfeld und eine erste Eingabeeinheit 10 mit einem in dem Griff 4 integrierten ersten Eingabebereich 12 zur Eingabe eines ersten Benutzerbefehls durch einen nicht dargestellten Benutzer des Aufstellgeräts 2 sowie eine zweite Eingabeeinheit 14 mit drei in dem Griff 4 integrierten zweiten Eingabebereichen 16 zur Eingabe eines zweiten Benutzerbefehls durch den Benutzer des Aufstellgeräts 2, wobei die Sendeeinheit 8 und die Eingabeeinheiten 10, 14 mit der Steuerung 6 signalübertragend verbunden sind. Die erste Eingabeeinheit 10 mit dem ersten Eingabebereich 12 dient zum Einschalten und zum Ausschalten des Aufstellgeräts. Die zweite Eingabeeinheit 14 mit den zweiten Eingabebereichen 16 dient zur Leistungseinstellung bei einer nicht dargestellten Kochstelle des Kochfelds, auf der das Aufstellgerät 2 vorher aufgestellt worden ist. Entsprechend ist eine nicht dargestellte Kochfeldsteuerung des Kochfelds mittels des zweiten Benutzerbefehls ansteuerbar. Die Eingabeeinheiten 10, 14 mit deren Eingabebereichen 12, 16 sind in dem Griff 4 vollständig integriert. Der erste Eingabebereich 12 der ersten Eingabeeinheit 10 ist zur leichteren Identifizierung in einer Mulde des Griffs 4 angeordnet, die in der Fig. 1 durch eine gestrichelte Linie 17 symbolisiert ist. Nach einem Einschalten des Aufstellgeräts 2 mittels des ersten Benutzerbefehls werden die zweiten Eingabebereiche 16 mit den jeweils auswählbaren Temperaturen für die oben genannte Kochstelle des Kochfelds hinterleuchtet, so dass die zweiten Eingabebereiche 16 zwecks Eingabe des zweiten Benutzerbefehls jeweils ebenfalls leicht identifizierbar sind. Die Eingabebereiche 12, 16 sind jeweils als sogenannte Touch-Tasten, also als berührungsempfindliche Tasten, ausgebildet. Die Eingabebereiche 12, 16, also die Touch-Tasten, können dabei unter einer Kunststoffoder Glasabdeckung angeordnet sein.

Ferner weist der Griff 4 einen Greifabschnitt 18 zum Greifen zwecks einer manuellen Bewegung des Aufstellgeräts 2 und einen ersten Eingabeabschnitt 20 und einen zweiten Eingabeabschnitt 22 auf, wobei der erste Eingabebereich 12 in dem ersten Eingabeabschnitt 20 und die zweiten Eingabebereiche 16 in dem zweiten Eingabeabschnitt 22 angeordnet sind. Wie aus der Fig. 1 ersichtlich ist, ist der Greifabschnitt 18 zwischen dem ersten Eingabeabschnitt 20 und dem zweiten Eingabeabschnitt 22 an dem Griff 4 angeordnet. In dem Greifabschnitt 18 ist mindestens ein Sensor 24 zur Detektierung einer Annäherung an den Griff und/oder einer Berührung des Griffs durch den Benutzer angeordnet, wobei der mindestens eine Sensor 24 beispielsweise als eine Mehrzahl von weiteren Touch-Tasten ausgebildet sein kann. Die Sensoren 24 sind bei dem vorliegenden Ausführungsbeispiel jeweils entlang von zwei sich einander gegenüberliegenden Längsseiten des Griff 4 angeordnet. Siehe Fig. 1. Die Sensoren 24 sind zur Detektierung des Greifens des Griffs 4 in dem Greifabschnitt 18 durch eine nicht dargestellte menschliche Hand ausgebildet, wobei in Abhängigkeit der Detektierung dieses Greifens durch die Sensoren 24 die Eingabe des ersten und des zweiten Benutzerbefehls mittels der Steuerung 6 sperrbar ist. Entsprechend wird die Eingabe des ersten und des zweiten Benutzerbefehls mittels der Steuerung 6 automatisch gesperrt, sofern mittels der Sensoren 24 ein Greifen des Griffs 4 in dem Greifabschnitt 18 durch eine menschliche Hand, nämlich die Hand des Benutzers des Aufstellgeräts 2, detektiert worden ist. Hierdurch ist gewährleistet, dass eine ungewünschte Fehlbedienung des Aufstellgeräts 2 bei einer manuellen Bewegung des Aufstellgeräts 2, nämlich eine ungewünschte Fehlbedienung der ersten oder zweiten Eingabebereiche 12, 16, wirksam verhindert ist.

Denkbar ist auch, dass mindestens einer des mindestens einen Sensors als ein Berührungssensor ausgebildet ist, wobei der Berührungssensor zumindest in dem ersten und/oder zweiten Eingabeabschnitt, mit Ausnahme des ersten und/oder zweiten Eingabebereichs, angeordnet ist, und wobei in Abhängigkeit der Detektierung einer Berührung des ersten und/oder zweiten Eingabeabschnitts des Griffs durch eine menschliche Hand mittels dieses Berührungssensors die Eingabe des ersten und/oder zweiten Benutzerbefehls mittels der Steuerung sperrbar ist. Entsprechend wird die Eingabe des ersten und/oder zweiten Benutzerbefehls mittels der Steuerung automatisch gesperrt, sofern eine Berührung des ersten und/oder zweiten Eingabeabschnitts des Griffs durch eine menschliche Hand mittels dieses Berührungssensors detektiert worden ist.

Ferner ist es möglich, dass mindestens einer des mindestens einen Sensors als ein Näherungssensor ausgebildet ist, wobei der Näherungssensor zumindest in dem ersten und/oder zweiten Eingabeabschnitt, mit Ausnahme des ersten und/oder zweiten Eingabebereichs, angeordnet ist, und wobei in Abhängigkeit der Detektierung einer Annäherung an den ersten und/oder zweiten Eingabeabschnitt des Griffs durch eine menschliche Hand mittels dieses Näherungssensors die Eingabe des ersten und/oder zweiten Benutzerbefehls mittels der Steuerung sperrbar ist. Entsprechend wird die Eingabe des ersten und/oder zweiten Benutzerbefehls mittels der Steuerung automatisch gesperrt, sofern eine Annäherung an den ersten und/oder zweiten Eingabeabschnitt des Griffs durch eine menschliche Hand mittels dieses Näherungssensors detektiert worden ist.

Auch ist es denkbar, dass mindestens einer des mindestens einen Sensors als ein Näherungssensor ausgebildet ist, wobei der Näherungssensor zumindest in dem Greifabschnitt angeordnet ist, und wobei in Abhängigkeit der Detektierung einer Annäherung an den Greifabschnitt des Griffs durch eine menschliche Hand mittels dieses Näherungssensors eine Anzeigeeinheit des Aufstellgeräts und/oder des Kochfelds mittels der Steuerung einschaltbar ist. Entsprechend wird eine Anzeigeeinheit des Aufstellgeräts und/oder des Kochfelds mittels der Steuerung automatisch eingeschaltet, sofern eine Annäherung an den Greifabschnitt des Griffs durch eine menschliche Hand mittels dieses Näherungssensors detektiert worden ist. Beispielsweise könnte es gemäß dem vorliegenden Ausführungsbeispiel vorgesehen sein, dass die oben genannte Hinterleuchtung der zweiten Eingabebereiche 16 auf die erläuterte Weise einschaltbar ist beziehungsweise automatisch eingeschaltet wird.

Um einen möglichst energiesparenden Betrieb des erfindungsgemäßen Aufstellgeräts und des Kochfelds zu ermöglichen, kann es vorgesehen sein, dass in Abhängigkeit der mittels des Sensors detektierten Annäherung an den Griff und/oder Berührung des Griffs die Steuerung des Aufstellgeräts und/oder eine Kochfeldsteuerung des Kochfelds von einem Standby-Modus in einen Bereitschaftsmodus oder einen Betriebsmodus überführbar ist, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts zu einer Kochstelle des Kochfelds und in dem Betriebsmodus für den Betrieb des Aufstellgeräts und/oder des Kochfelds in vollem Funktionsumfang ausgebildet sind/ist. Entsprechend wird die Steuerung des Aufstellgeräts und/oder eine Kochfeldsteuerung des Kochfelds von einem Standby-Modus in einen Bereitschaftsmodus oder einen Betriebsmodus überführt, sofern eine Annäherung an den Griff und/oder Berührung des Griffs mittels des Sensors detektiert worden ist. Beispielsweise ist es möglich, dass das Kochfeld in Abhängigkeit der Detektion der Annäherung an den Griff und/oder der Berührung des Griffs mittels der Steuerung einschaltbar ist beziehungsweise eingeschaltet wird.

Zusätzlich zu der Detektion einer Annäherung an den Griff und/oder einer Berührung des Griffs durch den Benutzer kann der mindestens eine Sensor auch für mindestens eine weitere Funktion verwendet werden. Beispielsweise ist es denkbar, dass mindestens einer des mindestens einen Sensors zur Detektion einer Drehbewegung einer menschlichen Hand relativ zu dem Griff ausgebildet ist, wobei in Abhängigkeit der Detektion der Drehbewegung ein Benutzerbefehl durch den Benutzer eingebbar ist. Bei dem vorliegenden Ausführungsbeispiel könnte beispielsweise der zweite Benutzerbefehl alternativ oder zusätzlich zu der zweiten Eingabeeinheit 14 mit den zweiten Eingabebereichen 16 mittels der vorgenannten Drehbewegung eingegeben werden. Der Benutzer würde also zwecks Einstellung der Leistungsstufe bei der Kochstelle des Kochfelds, auf der das Aufstellgerät aufgestellt worden ist, mittels einer Drehung von dessen Hand um eine Längsachse des Griffs 4 die Leistungsstufe für diese Kochstelle je nach Drehrichtung erhöhen oder erniedrigen können.

Zusätzlich zu dem mindestens einen Sensor kann es vorgesehen sein, dass das Aufstellgerät einen mit der Steuerung signalübertragend verbundenen Bewegungssensor zur Detektion einer manuellen Bewegung des Aufstellgeräts aufweist, wobei in Abhängigkeit der Detektion der Annäherung an den Griff und/oder der Berührung des Griffs und der Detektion der manuellen Bewegung des Aufstellgeräts mittels der Steuerung eine Leistung des Kochfelds automatisch reduzierbar ist. Hierdurch ist es möglich, sensible Bauteile des Kochfelds, die aufgrund einer bei einer manuellen Bewegung des Aufstellgeräts durch einen Benutzer auftretenden mechanischen Belastung in deren Funktion beeinträchtigt oder beschädigt werden könnten, wirksam zu schützen.

Das erfindungsgemäße Aufstellgerät gemäß dem vorliegenden Ausführungsbeispiel in den vorgenannten Varianten verhindert somit wirksam eine Fehlbedienung des Aufstellgeräts 2, zumindest jedoch ist die Möglichkeit einer Fehlbedienung dadurch deutlich reduziert. Damit ist auch die Sicherheit bei der Bedienung des Aufstellgeräts 2 und insbesondere die Sicherheit bei der Bedienung des Kochfelds wesentlich verbessert, ohne dass dadurch der Bedienkomfort für den Benutzer des Aufstellgeräts 2 vermindert ist. Zum einen ist durch die klare räumliche Trennung des Griffs 4 in einen Greifabschnitt 18 und in den mindestens einen Eingabeabschnitt 20, 22 eine ungewollte Bedienung des mindestens einen Eingabebereichs 12, 16 der mindestens einen Eingabeeinheit 10, 14 bei einem Greifen des Griffs 4 zur manuellen Bewegung des Aufstellgeräts 2 wirksam entgegengewirkt. Zum anderen ist durch das Vorsehen des mindestens einen Sensors 24 in dem Greifabschnitt 18 zur Detektierung einer Annäherung an den Griff 4 und/oder einer Berührung des Griffs 4 durch den Benutzer zwecks manueller Bewegung des Aufstellgeräts 2 eine Greifabsicht des Benutzers des Aufstellgeräts 2 automatisch erkennbar. Bei dem Aufstellgerät 2 ist somit eine Unterscheidung zwischen einer Bedienung des Griffs 4 zum Zwecke der Eingabe eines Benutzerbefehls auf der einen Seite und einer Bedienung des Griffs 4 zum Zwecke der manuellen Bewegung des Aufstellgeräts 2 auf der anderen Seite ermöglicht.

Das erfindungsgemäße Aufstellgerät ist jedoch nicht auf das oben erläuterte Ausführungsbeispiel beschränkt.

Das Aufstellgerät kann auch als ein Topf ausgebildet sein. Jedoch sind auch andere Ausführungsformen wie Wasserkocher, Bräter oder dergleichen denkbar. Entsprechend der Ausführungsform des Aufstellgeräts kann das Aufstellgerät über einen Griff oder mehrere Griffe verfügen, wobei die erfindungsgemäße Ausbildung des Griffs bei lediglich einem der Griffe oder einer Mehrzahl der Griffe vorliegen kann. Der mindestens eine Eingabebereich kann beispielsweise als ein berührungsempfindlicher Bereich des Griffs ausgebildet sein. In anderen Ausführungsformen kann der mindestens eine Eingabebereich auch als ein näherungssensitiver Bereich ausgebildet sein. Der mindestens eine Eingabebereich kann dabei von außen sichtbar oder unsichtbar an dem Griff angeordnet sein. Beispielsweise kann der mindestens eine Eingabebereich in den Griff vollständig integriert sein, so dass dieser Eingabebereich von außen weder sichtbar noch fühlbar ist. Das Aufstellgerät kann für ein induktives Kochfeld geeignet ausgebildet sein. Dies ist jedoch nicht zwingend erforderlich. Das erfindungsgemäße Aufstellgerät kann für alle denkbaren Kochfeldtypen geeignet ausgebildet sein.

Der mindestens eine Sensor ist nach Art, Funktionsweise, Dimensionierung, Material, Anzahl und Anordnung in weiten geeigneten Grenzen frei wählbar. Die vorgenannten Erläuterungen sind somit lediglich exemplarisch zu verstehen und nicht begrenzend. Je nach Anwendungsfall wird der Fachmann den mindestens einen Sensor geeignet auswählen und beispielsweise voneinander verschiedene Sensortechnologien miteinander kombinieren.

Zusätzlich zu der Sendeeinheit kann das erfindungsgemäße Aufstellgerät auch eine Empfangseinheit zwecks Signalübertragung von dem Kochfeld zu dem Aufstellgerät aufweisen. Denkbar ist auch, dass die Sendeeinheit des erfindungsgemäßen Aufstellgeräts als eine kombinierte Sende-/Empfangseinheit ausgebildet ist.

Anstelle der oben erläuterten Anordnung des Greifabschnitts und der beiden Eingabeabschnitte gemäß dem vorliegenden Ausführungsbeispiels ist es auch denkbar, dass der Griff lediglich einen einzigen Eingabeabschnitt oder mehr als zwei Eingabeabschnitte aufweist. Ferner ist auch eine abweichende relative Anordnung des Greifabschnitts zu dem mindestens einen Eingabeabschnitt möglich.

## Patentansprüche

1. Aufstellgerät (2) für ein Kochfeld, umfassend einen Griff (4) zur Handhabung des Aufstellgeräts (2), eine Steuerung (6), eine Sendeeinheit (8) zur Signalübertragung von dem Aufstellgerät (2) zu dem Kochfeld und mindestens eine Eingabeeinheit (10, 14) mit mindestens einem in dem Griff (4) integrierten Eingabebereich (12, 16) zur Eingabe eines Benutzerbefehls durch einen Benutzer des Aufstellgeräts (2), wobei die Sendeeinheit (8) und die Eingabeeinheit (10, 14) mit der Steuerung (6) signalübertragend verbunden sind, und wobei mittels des Benutzerbefehls das Kochfeld ansteuerbar ist, **dadurch gekennzeichnet, dass** der Griff (4) einen Greifabschnitt (18) zum Greifen zwecks einer manuellen Bewegung des Aufstellgeräts (2) und mindestens einen Eingabeabschnitt (20, 22) aufweist, wobei der Eingabebereich (12, 16) in dem Eingabeabschnitt (20, 22) angeordnet ist,
wobei zumindest in dem Greifabschnitt (18) mindestens ein Sensor (24) zur Detektierung einer Annäherung an den Griff (4) und/oder zur Detektierung einer Berührung des Griffs (4) durch den Benutzer angeordnet ist, wobei in Abhängigkeit der Detektierung der Annäherung an den Eingabeabschnitt des Griffs durch eine menschliche Hand mittels des als Näherungssensor ausgeführten Sensors (24) die Eingabe des Benutzerbefehls mittels der Steuerung (6) sperrbar ist, und/oder wobei in Abhängigkeit der Detektierung des Greifens durch diesen Sensor (24) die Eingabe des Benutzerbefehls mittels der Steuerung (6) sperrbar ist.

2. Aufstellgerät (2) nach Anspruch 1, **dadurch gekennzeichnet, dass** mindestens einer des mindestens einen Sensors (24) in dem Greifabschnitt (18) angeordnet und zur Detektierung des Greifens des Griffs (4) in dem Greifabschnitt (18) durch eine menschliche Hand ausgebildet ist.

3. Aufstellgerät (2) nach Anspruch 2, **dadurch gekennzeichnet, dass** in Abhängigkeit der Detektierung dieses Greifens durch diesen Sensor (24) die Eingabe des Benutzerbefehls mittels der Steuerung (6) sperrbar ist.

4. Aufstellgerät nach einem der Ansprüche 1 bis 3, **dadurch gekennzeichnet, dass** mindestens einer des mindestens einen Sensors (24) als ein Berührungssensor ausgebildet ist.

5. Aufstellgerät nach Anspruch 2 oder 4, **dadurch gekennzeichnet, dass** der Sensor (24) oder der Berührungssensor zumindest in dem Eingabeabschnitt, mit Ausnahme des Eingabebereichs (12, 16), angeordnet ist.

6. Aufstellgerät nach einem der vorhergehenden Ansprüche, **dadurch gekennzeichnet, dass** mindestens einer des mindestens einen Sensors als ein Näherungssensor ausgebildet ist, wobei der Näherungssensor zumindest in dem Greifabschnitt angeordnet ist.

7. Aufstellgerät nach einem der vorhergehenden Ansprüche, **dadurch gekennzeichnet, dass** mindestens einer des mindestens einen Sensors als ein Näherungssensor ausgebildet ist, wobei der Näherungssensor zumindest in dem Eingabeabschnitt, mit Ausnahme des Eingabebereichs, angeordnet ist.

8. Aufstellgerät nach einem der vorhergehenden Ansprüche, **dadurch gekennzeichnet, dass** in Abhängigkeit der mittels des Sensors detektierten Annäherung an den Griff und/oder Berührung des Griffs die Steuerung des Aufstellgeräts und/oder eine Kochfeldsteuerung des Kochfelds von einem Standby-Modus in einen Bereitschaftsmodus oder einen Betriebsmodus überführbar ist, wobei die Steuerung und/oder Kochfeldsteuerung in dem Standby-Modus im Wesentlichen lediglich zur Überführung in den Bereitschaftsmodus oder den Betriebsmodus, in dem Bereitschaftsmodus zur Durchführung einer Zuordnung des Aufstellgeräts zu einer Kochstelle des Kochfelds und in dem Betriebsmodus für den Betrieb des Aufstellgeräts und/oder des Kochfelds in vollem Funktionsumfang ausgebildet sind/ist.

9. Aufstellgerät nach einem der vorhergehenden Ansprüche, wobei, wobei, der Sensor (24) zur Detektierung einer Berührung des Eingabeabschnitts des Griffs durch eine menschliche Hand als ein Berührungssensor ausgeführt ist.

10. Aufstellgerät nach einem der vorhergehenden Ansprüche, **dadurch gekennzeichnet, dass** das Kochfeld in Abhängigkeit der Detektion der Annäherung an den Griff und/oder der Berührung des Griffs mittels der Steuerung einschaltbar ist.

11. Aufstellgerät nach einem der vorhergehenden Ansprüche, **dadurch gekennzeichnet, dass** mindestens einer des mindestens einen Sensors zur Detektion einer Drehbewegung einer menschlichen Hand relativ zu dem Griff ausgebildet ist, wobei in Abhängigkeit der Detektion der Drehbewegung ein Benutzerbefehl durch den Benutzer eingebbar ist.

12. Aufstellgerät nach einem der vorhergehenden Ansprüche, **dadurch gekennzeichnet, dass** das Aufstellgerät einen mit der Steuerung signalübertragend verbundenen Bewegungssensor zur Detektion einer manuellen Bewegung des Aufstellgeräts aufweist.

13. Aufstellgerät nach einem der vorhergehenden Ansprüche wobei in Abhängigkeit der Detektion der Annäherung an den Griff und/oder der Berührung des Griffs und der Detektion der manuellen Bewegung des Aufstellgeräts mittels der Steuerung eine Leistung des Kochfelds automatisch reduzierbar ist.

14. Aufstellgerät (2) nach einem der vorhergehenden Ansprüche, **dadurch gekennzeichnet, dass** in dem Griff (4) ein erster Eingabeabschnitt (20) mit mindestens einem ersten Eingabebereich (12) und ein zweiter Eingabeabschnitt (22) mit mindestens einem zweiten Eingabebereich (16) angeordnet sind, wobei der Greifabschnitt (18) zwischen dem ersten und dem zweiten Eingabeabschnitt (20, 22) an dem Griff (4) angeordnet ist.

## Claims

1. Placeable device (2) for a hob, comprising a handle (4) for handling the placeable device (2), a controller (6), a transmitter unit (8) for transmitting signals from the placeable device (2) to the hob, and at least one input unit (10, 14) having at least one input region (12, 16) integrated in the handle (4) for a user of the placeable device (2) to input a user command, the transmitter unit (8) and the input unit (10, 14) being connected to the controller (6) so as to transmit signals, and it being possible to control the hob by means of the user command, **characterised in that** the handle (4) has a grip portion (18) for gripping for the purpose of manually moving the placeable device (2), and at least one input portion (20, 22), the input region (12, 16) being arranged in the input portion (20, 22), at least one sensor (24) for detecting the handle (4) being approached and/or for detecting the handle (4) being touched by the user being arranged at least in the grip portion (18), it being possible to block the input of the user command by means of the controller (6) on the basis of a human hand approaching the input portion of the handle being detected by means of the sensor (24) designed as a proximity sensor, and/or it being possible to block the input of the user command by means of the controller (6) on the basis of the gripping being detected by this sensor (24).

2. Placeable device (2) according to claim 1, **characterised in that** at least one of the at least one sensor (24) is arranged in the grip portion (18) and is designed to detect a human hand gripping the handle (4) in the grip portion (18).

3. Placeable device (2) according to claim 2, **characterised in that** the input of the user command can be blocked by the controller (6) on the basis of this gripping being detected by this sensor (24).

4. Placeable device according to any of claims 1 to 3, **characterised in that** at least one of the at least one sensor (24) is designed as a touch sensor.

5. Placeable device according to either claim 2 or claim 4, **characterised in that** the sensor (24) or the touch sensor is arranged at least in the input portion, with the exception of the input region (12, 16).

6. Placeable device according to any of the preceding claims, **characterised in that** at least one of the at least one sensor is designed as a proximity sensor, the proximity sensor being arranged at least in the grip portion.

7. Placeable device according to any of the preceding claims, **characterized in that** at least one of the at least one sensor is designed as a proximity sensor, the proximity sensor being arranged at least in the input portion, with the exception of the input region.

8. Placeable device according to any of the preceding claims, **characterised in that**, on the basis of the sensor detecting the handle being approached and/or the handle being touched, the controller of the placeable device and/or a hob controller of the hob can transfer from a standby mode into a ready mode or an operating mode, the controller and/or hob controller being designed, in the standby mode, substantially only to transfer into the ready mode or the operating mode, being designed, in the ready mode, to associate the placeable device with a hotplate of the hob, and being designed, in the operating mode, to operate the placeable device and/or the hob with full functionality.

9. Placeable device according to any of the preceding claims, wherein the sensor (24) for detecting a human hand touching the input portion of the handle is designed as a touch sensor.

10. Placeable device according to any of the preceding claims, **characterised in that** the hob can be switched on by the controller on the basis of the detection of the handle being approached and/or the handle being touched.

11. Placeable device according to any of the preceding claims, **characterised in that** at least one of the at least one sensor is designed to detect a rotational movement of a human hand relative to the handle, it being possible for the user to input a user command on the basis of the detection of the rotational movement.

12. Placeable device according to any of the preceding claims, **characterised in that** the placeable device has a movement sensor which is connected to the controller so as to transmit signals and is intended for detecting a manual movement of the placeable device.

13. Placeable device according to any of the preceding claims, wherein a power of the hob can be automatically reduced by the controller on the basis of the detection of the handle being approached and/or the handle being touched and the detection of the manual movement of the placeable device.

14. Placeable device (2) according to any of the preceding claims, **characterized in that** a first input portion (20) having at least one first input region (12) and a second input portion (22) having at least one second input region (16) are arranged in the handle (4), the grip portion (18) being arranged on the handle (4) between the first and the second input portion (20, 22).

## Revendications

1. Dispositif d'installation (2) pour plaque de cuisson, comprenant une poignée (4) permettant de manipuler le dispositif d'installation (2), un appareil de commande (6), une unité d'émission (8) permettant de transmettre des signaux depuis le dispositif d'installation (2) vers la plaque de cuisson et au moins une unité d'entrée (10, 14) comportant au moins une zone d'entrée (12, 16) intégrée dans la poignée (4) et permettant l'entrée d'une instruction d'utilisateur par un utilisateur du dispositif d'installation (2), l'unité d'émission (8) et l'unité d'entrée (10, 14) étant connectées à l'appareil de commande (6) par transmission de signaux, et la plaque de cuisson pouvant être commandée au moyen de l'instruction d'utilisateur, **caractérisé en ce que** la poignée (4) présente une section de préhension (18) permettant la saisie afin de déplacer manuellement le dispositif d'installation (2) et au moins une section d'entrée (20, 22), la zone d'entrée (12, 16) étant disposée dans la section d'entrée (20, 22), au moins un capteur (24) permettant de détecter une approche de la poignée (4) et/ou de détecter un toucher de la poignée (4) par l'utilisateur étant disposé au moins dans la section de préhension (18), en fonction de la détection de l'approche de la section d'entrée de la poignée par une main humaine au moyen du capteur (24) conçu comme capteur de proximité, l'entrée de l'instruction d'utilisateur pouvant être verrouillée au moyen de l'appareil de commande (6), et/ou, en fonction de la détection de la prise par ledit capteur (24), l'entrée de l'instruction d'utilisateur pouvant être verrouillée au moyen de l'appareil de commande (6).

2. Dispositif d'installation (2) selon la revendication 1, **caractérisé en ce qu'**au moins l'un de l'au moins un capteur (24) est disposé dans la section de préhension (18) et est configuré pour détecter la saisie de la poignée (4) dans la section de préhension (18) par une main humaine.

3. Dispositif d'installation (2) selon la revendication 2, **caractérisé en ce que** l'entrée de l'instruction d'utilisateur peut être verrouillée au moyen de l'appareil de commande (6) en fonction de la détection de ladite saisie par ledit capteur (24).

4. Dispositif d'installation selon l'une des revendications 1 à 3, **caractérisé en ce qu'**au moins l'un de l'au moins un capteur (24) est réalisé sous la forme d'un capteur tactile.

5. Dispositif d'installation selon la revendication 2 ou 4, **caractérisé en ce que** le capteur (24) ou le capteur tactile est disposé au moins dans la section d'entrée, à l'exception de la zone d'entrée (12, 16).

6. Dispositif d'installation selon l'une des revendications précédentes, **caractérisé en ce qu'**au moins l'un de l'au moins un capteur est réalisé comme capteur de proximité, le capteur de proximité étant disposé au moins dans la section de préhension.

7. Dispositif d'installation selon l'une des revendications précédentes, **caractérisé en ce qu'**au moins l'un de l'au moins un capteur est réalisé comme capteur de proximité, le capteur de proximité étant disposé au moins dans la section d'entrée, à l'exception de la zone d'entrée.

8. Dispositif d'installation selon l'une des revendications précédentes, **caractérisé en ce qu'**en fonction de l'approche de la poignée détectée par le capteur et/ou du toucher de la poignée, l'appareil de commande du dispositif d'installation et/ou un appareil de commande de plaque de cuisson de la plaque de cuisson peut être transféré d'un mode veille à un mode d'attente ou à un mode de fonctionnement, l'appareil de commande et/ou l'appareil de commande de plaque de cuisson étant configurés dans le mode veille sensiblement uniquement pour la transmission vers le mode d'attente ou le mode de fonctionnement, dans le mode d'attente pour effectuer une attribution du dispositif d'installation à un foyer de cuisson de la plaque de cuisson, et dans le mode de fonctionnement pour le fonctionnement du dispositif d'installation et/ou de la plaque de cuisson de manière pleinement opérationnelle.

9. Dispositif d'installation selon l'une des revendications précédentes, dans lequel le capteur (24) permettant de détecter un toucher de la section d'entrée de la poignée par une main humaine est réalisé comme capteur tactile.

10. Dispositif d'installation selon l'une des revendications précédentes, **caractérisé en ce que** la plaque de cuisson peut être allumée au moyen de l'appareil de commande en fonction de la détection de l'approche de la poignée et/ou du toucher de la poignée.

11. Dispositif d'installation selon l'une des revendications précédentes, **caractérisé en ce qu'**au moins l'un de l'au moins un capteur est configuré pour détecter un mouvement de rotation d'une main humaine par rapport à la poignée, une instruction d'utilisateur pouvant être entrée par l'utilisateur en fonction de la détection du mouvement de rotation.

12. Dispositif d'installation selon l'une des revendications précédentes, **caractérisé en ce que** le dispositif d'installation présente un capteur de mouvement permettant de détecter un mouvement manuel du dispositif d'installation et connecté à l'appareil de commande par transmission de signaux.

13. Dispositif d'installation selon l'une des revendications précédentes, dans lequel, en fonction de la détection de l'approche de la poignée et/ou du toucher de la poignée et de la détection du mouvement manuel du dispositif d'installation, une puissance de la plaque de cuisson peut être réduite automatiquement au moyen de l'appareil de commande.

14. Dispositif d'installation (2) selon l'une des revendications précédentes, **caractérisé en ce qu'**une première section d'entrée (20) comportant au moins une première zone d'entrée (12) et une seconde section d'entrée (22) comportant au moins une seconde zone d'entrée (16) sont disposées dans la poignée (4), la section de préhension (18) étant disposée entre les première et seconde sections d'entrée (20, 22) sur la poignée (4).
